(19) Europäisches Patentamt
European Patent Office
Office européen des brevets

(11) **EP 3 637 077 A1**

(12) **EUROPEAN PATENT APPLICATION**

(43) Date of publication:
   **15.04.2020   Bulletin 2020/16**

(51) Int Cl.:
   *G01M 1/22* (2006.01)       *G01M 1/28* (2006.01)

(21) Application number: **18465593.4**

(22) Date of filing: **08.10.2018**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(71) Applicant: **Continental Automotive GmbH
   30165 Hannover (DE)**

(72) Inventors:
   • **Marin, Gabriel
     300734 Timisoara (RO)**
   • **Stancalie, Laurentiu
     300744 Timisoara (RO)**

(54) **METHOD FOR DETECTION OF UNBALANCED WHEEL OF A VEHICLE, ELECTRONIC CONTROL UNIT CONFIGURED TO APPLY THE METHOD, AND STORAGE MEDIUM COMPRISING CODE FOR PERFORMING SUCH A METHOD**

(57)   The invention relates to a method for detection of unbalance wheel (FL,FR,RL,RR) of a vehicle carried out in an Electronic Control Unit (ECU), using an ECU acceleration sensor at a predetermined calling rate, digital processing of an acceleration signal read from said sensor and using speed sensors acquired from vehicle's Controller Area Network (CAN) bus comprising a first set of steps where the Electronic Control Unit (ECU) is configured by setting the relevant parameters for detecting unbalance of the wheel, the detection conditions and their corresponding parameter thresholds, a second set of steps where the actual values corresponding to the relevant parameters are determined, and a third set of steps, where the detection conditions are applied to the relevant parameters and a decision is made upon the unbalance of the wheel.

   The invention further relates to an electronic control unit configured to apply the method, and a storage medium comprising code for performing such a method.

FL   5   FR

3

2   101

4

1

RL   RR

Fig.1

1 VEHICLE
2 ECU
3 ENGINE
4 CAN BUS
5 INSTRUMENT PANEL
101 ACCELERATION SENSOR

EP 3 637 077 A1

**Description**

**Technical field**

The invention relates to a method for detection of unbalanced wheel of a vehicle, to an electronic control unit (ECU) being configured to perform such a method, and to a storage medium comprising code for performing such a method.

**Background of the invention**

Well-balanced wheel of a vehicle is when distribution of the wheel mass in the stable state is uniform. A balanced wheel within the industry's acceptable tolerance levels for each vehicle has a wheel rotation frequency at a given speed of the vehicle and at a given wheel circumference - thereafter referred to as wheel rotation frequency.

In practice, in almost all circumstances, wheels do present various degrees of unbalancing state. The non-uniform mass distribution can occur along the circumference of the wheel as well as in the cross-section of the wheel.

Wheel out of balance is a problem well known to the average motorist. Unbalance causes vibrations to vehicle chassis, whose frequency and amplitude increase with the linear speed of the vehicle. In case of considerable unbalancing, apart from the vibrations, the motorist is also exposed to noise.

Apart from the uncomfortable effect of the vibrations, wheel out of balance cause increased rates of wear to the steering joints and the tires, putting safety on the road at risk.

For these reasons, various technical solutions addressed the problem of earlier identification of the unbalance of the wheels long before said unbalance is perceived by human sensing system.

It is known from general prior art that a rotational frequency of a wheel having an unbalance can be measured in a frequency spectrum that is recorded using typical acceleration sensors and that said rotational frequency can, in most cases, be identified from other vibrations that are, for example, those caused by an engine or road conditions, because the rotational frequency is known as having other amplitude characteristics.

One example of method addressing unbalance is disclosed in EPA 14464009.1 published on 06.04.2016. In this document, a method for detecting unbalance of a wheel is provided together with an electronic control unit for performing the method and a storage medium comprising code for such a method.

EPA 14464009.1 refers to a method for detecting unbalance of a wheel by evaluating signals from acceleration sensors and speed sensors. Particularly, the method includes steps of determining an acceleration signal, determining a rotational frequency of the wheel, calculating a frequency spectrum of the acceleration signal using Fast Fourier Transformation (FFT), the frequency spectrum comprising a number of amplitudes, wherein each amplitude corresponds to a frequency and detecting unbalance if an amplitude corresponding to a measurement frequency exceeds a predetermined threshold, the measurement frequency having a predetermined relation to the rotational frequency.

According to Korean Patent Application 20130064344 , a device and a method for diagnosing a wheel unbalance according to a maximum value of a power spectrum and an excess of a reference frequency with respect to a wheel rotation frequency of an acceleration signal, where the method includes steps such as measuring acceleration signal in respect to vertical axis; verifying if particular conditions related to packing road surface and vehicle speed are fulfilled in relation with said acceleration signal; processing said signal by amplifying it and producing-by means of using Fast Fourier Transformation, of the power spectrum of the acceleration signal; extracting the maximum value of power spectrum from the wheel rotation frequency and determining the threshold of whether the wheel is balanced or not (wheel balance acceptance or rejection as worded in the application) according to the maximum value of power spectrum and the standard excess times of the wheel rotation frequency. The last steps of the method aim to determine whether maximum value of the power spectrum is at least two times greater than the reference value and whether the exceeding of two times of the reference value was repeated over two times or not, in case the answer to the last conditions is positive, the device returns a warning signal to the driver indicating that there is unbalance in one wheel.

Prior art has the following disadvantages:

-    First disadvantage of both prior art documents is that the use of FFT requires high performant calculations which, in turn, requires more processing capacity of the ECU. Typically, at least 1Kbyte of memory is needed for the module where FFT is carried out. Certain vehicles are not equipped with powerful processing units; thus the method of prior art cannot work on them;

-    Second disadvantage of both prior art documents is that as a consequence of using FFT, both prior art solutions involve high intensive calculation;

-    Third disadvantage of both prior art documents is that the method does not disclose how is determined the threshold between balanced an unbalanced wheel;

-    Fourth disadvantage of EPA 14464009.1 only is that the range of the mentioned acceleration sensors is limited;

- Fifth disadvantage of Korean Patent Application 20130064344 only is that method is valid only for the speed range 80-160 km/h.-

## Problem to be solved by the invention

The problem to be solved by the invention is how to detect wheel unbalance in real time by means of a simpler and more accurate method using the information regarding the speed and the acceleration as provided by systems and subsystems already installed on the vehicle, not requiring a powerful processing module of the electronic control unit, having lower runtime for calculation, said method including determining of the threshold between the balanced and unbalanced wheel according to the characteristics of each vehicle, while enlarging the range of measurement of the acceleration sensors and enlarging speed ranges for which the method is reliable.

## Summary of the invention

In order to solve the problem, it is thus a first object of the invention to provide a method for detecting unbalance of a wheel (FL,FR,RL,RR) of a vehicle carried out in an Electronic Control Unit (ECU), using an ECU acceleration sensor at a predetermined calling rate, digital processing of an acceleration signal read from said sensor and using speed sensors acquired from vehicle's Controller Area Network (CAN) bus comprising a first set of steps where the Electronic Control Unit (ECU) is configured by setting the relevant parameters for detecting unbalance of the wheel, the detection conditions and their corresponding parameter thresholds, a second set of steps where the actual values corresponding to the relevant parameters are determined, and a third set of steps, where the detection conditions are applied to the relevant parameters and a decision is made upon the unbalance of the wheel.
Within first set of steps:

- the Electronic Control Unit (ECU) is configured by setting at least two relevant parameters for the assessment of the unbalance, together with at least one corresponding parameter threshold;
- at least one digital filter is configured for processing the acceleration signal, the detection conditions to be fulfilled during the detection qualification phase by the at least two relevant parameters;
- at least one detection condition threshold and their corresponding parameter thresholds are set;
- a time interval and a measurement range interval in which the speed of the vehicle can vary in order to allow measurement of said relevant parameters are defined;
- at least one axis of the acceleration sensor (101) to measure the acceleration signal is selected;
- a length of a detection qualification phase is set;
- the values of relevant parameters, the detection conditions and their corresponding parameter thresholds are stored in a memory.

In the second set of steps the acceleration signal is read on said at least one axis acceleration sensor and, simultaneously, the actual values of the vehicle speed are acquired through vehicle's Controller Area Network (CAN) bus, and consequently the actual values acquired when the vehicle is in the operation corresponding to said relevant parameters are determined.
In the third set of steps the at least two detection conditions are applied by using the digital filter, and a decision is made upon the unbalance of the wheel if the at least two detection conditions are fulfilled during the length of the detection qualification phase.
The relevant values corresponding to the condition of unbalanced wheel are stored in said memory and a warning message is sent to the instrument panel to display to the driver.
It is a further object of the present invention to provide an Electronic Control Unit incorporated in a vehicle being configured to perform a method comprising:

i) a calibration module configured to carry out the followings:

- to define at least two relevant parameters for the assessment of the unbalance together with at least one corresponding parameter threshold;
- to configure the at least two digital filters for processing the acceleration signal;
- to select at least one axis on which the acceleration sensor measures the acceleration signal;
- to define a time interval and a measurement range interval in which the speed of the vehicle can vary in order to allow measurement of the relevant parameters.
- to set a length of the detection qualification phase;
- to set at least two detection conditions to be fulfilled during the detection qualification phase by the relevant parameters and to set at least one detection condition threshold.

ii) A communication module adapted for vehicle's Controller Area Network (CAN) bus;
iii) At least one memory to store the expected values, the parameter thresholds and the conditions, and the values corresponding to the condition of unbalanced wheel
iv) A signal processing module configured to carry out the followings:

- to read the acceleration signal on the at least one axis acceleration sensor and, simultaneously, obtaining the actual values of the vehicle speed through vehicle's Controller Area Network (CAN) bus;
- to determine wheel rotation frequency;
- to compute actual values corresponding to said relevant parameters.

v) At least two digital filters, out of which one adapted to be used for time-based processing of the acceleration signal and one adapted to be used for processing of the acceleration signal, said filters being configured by the calibration module to apply the at least two detection conditions;
vi) A diagnostic and decision signal processing module configured to carry out the followings:

- to apply the at least two detection conditions;
- to determine a wheel as unbalanced if the at least two detection conditions are fulfilled during the length of the detection qualification phase;
- in case detection conditions are met, to store the condition of unbalanced wheel in the at least one memory module and to send it to the instrument panel.

It is still a further object of the invention to provide for non-volatile computer-readable storage medium comprising code to cause a processor to perform the said method.

### The advantages of the invention

The main advantages of this invention are the following:

- First advantage of this invention is that it allows to detect unbalance of a wheel using lower memory and performance capacity of the processing module of the electronic control unit which enlarges the possibility to work the invention of a wider range of vehicles, since not all vehicles are equipped with powerful processors in their ECUs to allow the at least 1Kbyte of memory needed to carry out FFT;
- The second advantage of this invention is that it allows to detect unbalance of a wheel in real time with low runtime calculation, typically maximum 20µs runtime;
- The third advantage of the invention is that it allows fine-tuning of said detection conditions and their respective thresholds to the particulars of each vehicle;

- Another advantage of the invention is that it improves the accuracy of the detection by defining at least two relevant parameters and setting at least two detection conditions;
- Another advantage of the invention is that it enlarges the range of the mentioned acceleration sensor to the actual range of most acceleration sensors used normally for roll-over detection;
- Another advantage of the invention is that it enlarges the speed range;
- Another advantage is that working of the invention does not require additional devices or hardware installed on the vehicle in order to provide information about the wheels or the speed, since it uses all the information of vehicle's existing different systems and subsystems;
- Another advantage is that the method of the invention is appropriate for any type of road surface;
- Still another advantage of the invention is that it can be used in the context of automated driving, that is driving without a human driver.

Further features and advantages of the invention stems from the following description and the claims with reference to the accompanying drawings, tables and graphs, where like reference characters designate the same component throughout the figures.

### Description of the drawings

The invention will hereafter be described with reference to the drawings where:

Fig.1 depicts a schematic view of the vehicle and the position of the sensors, and of the Electronic Control (ECU) where the method is performed;
Fig. 2 depicts a diagram where the steps of the method are presented;
Fig. 3 depicts the particulars of a preferred embodiment of the method according to the invention;
Fig. 4 depicts the particulars of another preferred embodiment of the method according to the invention;
Table 1 shows the principle of wheel unbalance detection;
Table 2 shows example of tests made with various weights and the percentages of the correct detection;
Table 3 shows details examples of the tests of Table 2.

List of references in the drawings:

1. Vehicle;
2. Electronic Control Unit (ECU) where the method is performed;
3. Vehicle's engine;
4. Vehicle's Controller Area Network (CAN) bus;
5. Instrument panel;
FL, FR, RL, RR- the wheels of the vehicle 1, respectively Front Left, Front Right, Rear Left, Rear Right;
101 Acceleration sensor of the ECU 2;

## Detailed description of the invention

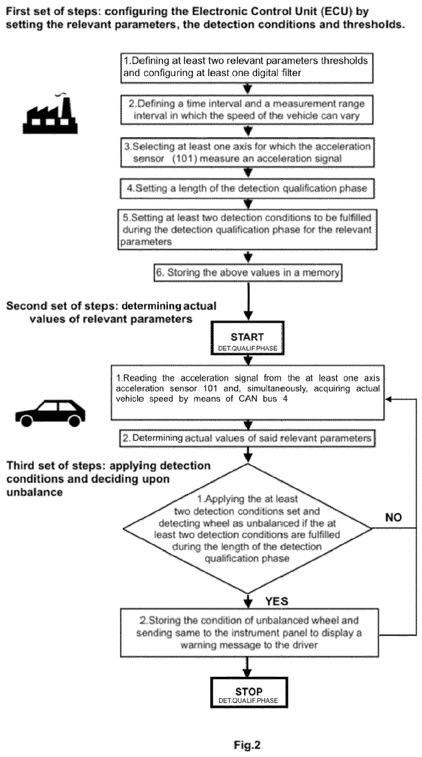

The method according to the invention allows detection of the unbalance wheel automatically during operation of the vehicle 1, using the data provided by the sensors that are already provided in the vehicle 1 for the purpose of early detection of accidents. - See Fig. 2

The sensors used in this invention are at least an acceleration sensor 101 placed within ECU. For the ease of understanding throughout the specification and claims the term acceleration sensor 101 shall stand for one sensor or more than one sensor, and the detection of the unbalance for one wheel and it shall be considered that the vehicle 1 has four wheels.

Information about vehicle speed in kph, mps, or wheels speed in rotation per minute are available to the ECU through said vehicle's CAN bus 4, said vehicle speed being measured by other electronic control unit or units of the vehicle.

The acceleration sensor 101 is placed in the ECU 2 and has a predefined frequency at which it measures the acceleration signal, while processing of the data from the sensor is made at second predefined frequency, named calling rate.

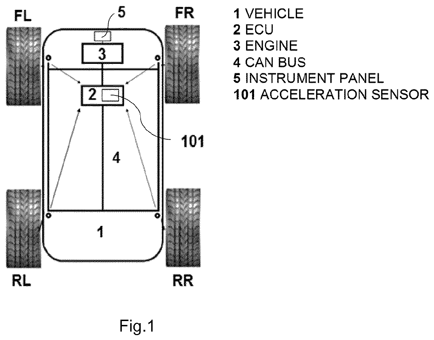

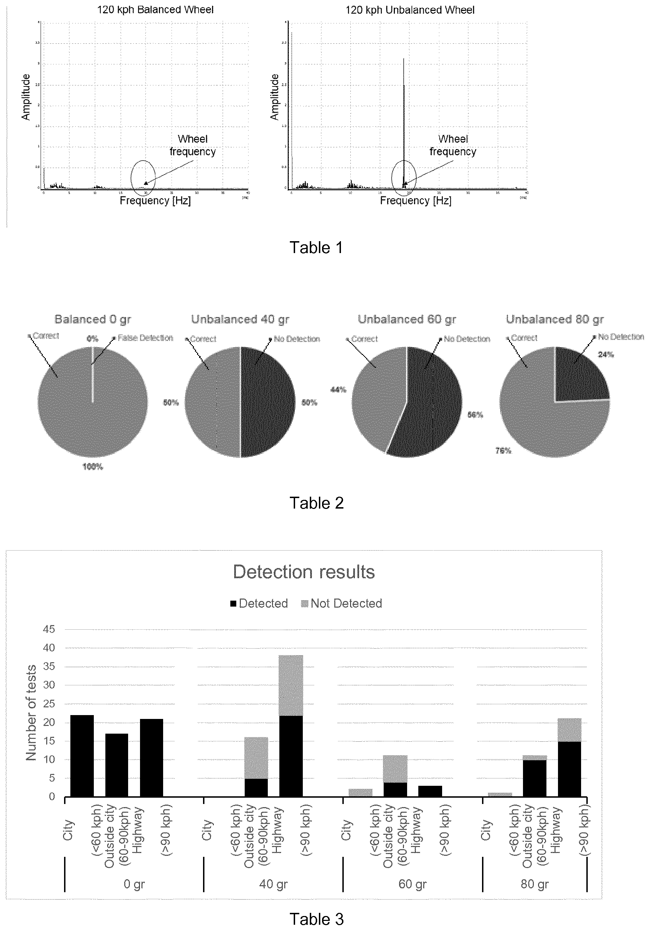

The proposed technical solution involves digital signal processing of the acceleration signals by the electronic control unit ECU 2, comprising various modules specially adapted to carry out the method, for the purpose of applying the method, said ECU 2.-See Fig. 1.

The invention is based on the finding that, in case of an unbalanced wheel, the energy stored in the acceleration signals recorded by the acceleration sensor is expected to be significantly higher for the frequency matching the wheel rotation frequency than in the case of a balanced wheel for a given speed of the vehicle 1.

Wheel unbalance leads to an increase of amplitude of vibrations of the chassis. Such energy is measured by the acceleration signals as recorded by the acceleration sensor on at least one axis. - See table 1.

The unbalance is usually tested by placing known weights on a wheel and measuring amplitude of unbalance at known speeds. It is known that the effect of the unbalanced wheel on the chassis is relative to the speed of the vehicle 1 and that the greater amplitude of vibrations is noted for a higher vehicle speed. This is why in general reliable unbalance detection is difficult to be carried out when the speed is lower than 60kph.

Table 2 shows example of tests made with weights of 0 gr, 40 gr, 60gr and 80 gr and the corresponding percentages of the correct detection.
Table 3 details examples of each of the afore-mentioned weights tested at various values of speeds such as those lower than 60kph, 60-90 kph range and greater than 90kph. Tables 2 and 3 show that more tests were made with the weights of 40 and 80g than with the weights of 60g and that the reliability of the tests with 80g showed correct detection in 76% of cases. The results of these tests shall not be interpreted as limiting the invention in any way, said tests being only a part of the numerous tests carried out by the inventors.

The challenge of any method for detecting unbalance of a wheel while the vehicle is in operation is that the method should prompt the driver a real unbalance and not a false unbalance, one of the key elements of the detection of unbalance being how to determine the threshold from which unbalance is detected. This depends on a variety of factors such as: the type of engine 3, the type of tires, the speed, the range of measurement of acceleration sensor, the measurement resolution, etc. With the exception of the speed, all the other factors are related the particular configuration of each individual vehicle 1 and cannot be changed: for example, a Mercedes S-Klasse shall have a different configuration than a Toyota Land Cruiser.

Considering that, at the same given speed of the vehicle, in case of the balanced wheel, the energy stored in the recorded acceleration signal is unlikely to be significant for the frequency matching wheel rotation frequency, the influence of the road condition is not a variable that affects in present invention the establishing of said threshold.

The invention aims to provide flexibility to the manufacturers, so that they can have ECU 2 configured to carry out the method for each particular type of vehicle according to vehicles' characteristics.

The method according to the invention contains three sets of steps.

**The** first set of steps is carried out by the manufacturer before vehicle 1 is operated - typically in the manufacturing plant or in a place authorized to carry out repairs, while the second and the third sets of steps are carried out repetitively during operation of said vehicle 1.

One of the parameters used in this invention is tire circumference, hereafter referred to as TireCirc. For each type of wheel there are standard values provided by the tire manufacturer that are stored in the at least one memory of the ECU: tire width, tire ratio and tire diameter, expressed in inches. Tire circumference is calculated using the formula:

```
TireCirc (in meters) = π * (2 * (tireWidth (in millimetres)/ 10

* tireRatio / 100) + tireDiameter (in inches) * 2.54) / 100

[Formula 1]
```

Considering that the tire circumference is calculated for the purpose of carrying out other functions of the vehicle 1, irrespective of applying or not the method of the invention, said calculation shall not be included as a step of the method.

First set of steps of the method aims to configure the ECU 2 by setting the relevant parameters, the detection conditions and their corresponding parameter thresholds.

The first sub-step of the first set of steps refers to defining at least two relevant parameters for the assessment of the unbalance together with at least one corresponding parameter threshold and also refers to configuring the at least one digital filter that shall be used for processing the accelerations signal.

The second sub-step of the first set of steps refers defining a time interval and a measurement range interval in which the speed of the vehicle 1 can vary. In other words, the second sub-step aims to define the limits within which the speed can vary in order to be considered as constant in order to allow measurement of the relevant parameters.

The third sub-step of the first set of steps refers to selecting at least one axis on which the acceleration sensor 101 shall measures the acceleration signal. Selection of the axis or axes depends on the specific configuration of the acceleration sensor and the place of the ECU 2 for each type of vehicle 1. The axis or, respectively, axes chosen must correspond to the greatest accuracy of the measurement of the acceleration signal for said type of vehicle 1.

The fourth sub-step of the first set of steps refers to setting a length of the detection qualification phase as the time in which the ensemble of the second and third set of steps together shall be carried out. From the moment when the engine 3 is started, as long as the detection of the unbalance is activated and the speed is in the range of 60-250 kph detection qualification phases will succeed one after another.

The fifth sub-step of the first set of steps refers to defining the at least two detection conditions to be fulfilled during the detection qualification phase by the relevant parameters for detection of an unbalanced wheel of a vehicle, said relevant parameters being already defined in the first sub-step together. In this sub-step it is also set at least one threshold that refers to the at least one of the detection conditions.

In the sixth and last sub-step of the first set of steps, the values defined for the relevant parameters, the detection conditions and their corresponding parameter thresholds are stored in a memory of the ECU 2. This completes the configuration of the ECU 2 and the vehicle 1 is now ready to be operated.

In the first sub-step of the second set of steps, the acceleration signal is read on the selected axis acceleration sensor 101 and, simultaneously the actual speed is acquired from vehicle's CAN bus 4.

**In** the second sub-step of the second set of steps, the actual values corresponding to said relevant parameters when the vehicle is operated are calculated.

In the first sub-step of the third set of steps, the at least two detection conditions as previously set are applied by using the digital filter. The wheel is detected as unbalanced if the at least two detection conditions are fulfilled during the length of the detection qualification phase.

Once the wheel is acknowledged as unbalanced, in the second sub-step of the third set of steps, the condition of unbalanced wheel is stored in the memory of the ECU 2 and it is sent via CAN bus 4 to the instrument panel 5 to display a warning message to the driver.

After expiry of the current detection qualification phase, the conditions are reset to start a new detection qualification phase, irrespective of whether unbalance was or not detected in the previous detection qualification phase.

Preferably the method is carried out in placed preferably in an Airbag Control Unit ACU 2 comprising the acceleration sensor 101 at a calling rate between 500 Hz and 1000 Hz.

Hereafter, for the ease of understanding, the detailed description of the method, its embodiments and the examples of realization shall be made for the case when said method is carried out in the ACU 2. However, this shall be not considered as limiting the invention to the method carried out in the Airbag Control Unit 2, for example the invention may be carried out in a chassis control unit or any other electronic control unit available on the vehicle 1.

Consequently, the preferred sensor referred to hereafter is an ACU sensor 101. This is available on most mid- and high-end class new vehicles sold on the market The range of measuring the acceleration signal is of 0-6 g, it corresponds to usual range of most ACU sensors for standard roll-over detection. The resolution of the acceleration measurement is over 1000 digits/g.

According to a preferred embodiment, parameter thresholds may be expressed as a closed interval of its relevant parameter with corresponding tolerance parameters. Said closed interval is created by adding and subtracting the corresponding tolerance parameter from a selected value of the relevant parameter.

According to a preferred embodiment, the ACU 2 is configured to perform time-based processing of the acceleration signal. The time-based processing method, according to the invention aims to find the frequency of the measured acceleration signal and to compare it with the wheel rotation frequency, by filtering the acceleration signal and finding the time elapsed between two successive consecutive changes in direction.

**The** particular configuration of the ACU 2 in the first set of steps of the first preferred embodiment is made as follows:

    i. Two relevant parameters are defined for detection of unbalance of a wheel in the first sub-step: the first is the wheel frequency rotation WheelFreq, measured in Hz.; and second is the time needed for complete wheel rotations at the respective frequency, ExpMsRot measured in rotations;

    - Wheel rotation frequency depends on the vehicle speed as acquired from vehicle's CAN bus 4, and on the tire circumference and can be determined using the formula:

$$\mathtt{WheelFreq\ (Hz)\ =\ VehicleSpeed\ (kph)\ /\ (3.6\ *\ TireCirc\ (m))}$$

$$\mathtt{[Formula\ 2]\ corresponding\ to\ each\ wheel\ rotation\ frequency}$$

    corresponding to each wheel rotation frequency

    - The expected time for one complete wheel rotation for the wheel spinning at the wheel rotation frequency -ExpMsRot, can be determined using the formula:

$$\mathtt{ExpMsRot\ (in\ ms)\ =\ 1000\ /\ WheelFreq.\ [Formula\ 3];}$$

    it typically ranges between 30-120ms corresponding to vehicle speed range of 60-250 kph;

    - The tolerance parameter for frequency is called ZLpTolerance and is comprised preferably within the interval 0-5 Hz.

    - The tolerance parameter for expected time for one complete wheel rotation ExpMsRot, is named MatchTolerance and is defined as a percentage that typically within the range 5-15%.

    - The digital filter is also configured in the first substep in order to filter the acceleration signal using 2 cut-off frequencies:

        - a lower cut-off frequency equal to WheelFreq - ZLp Tolerance, resulting FilterLow frequency, and
        - a higher cut-off frequency equal to WheelFreq + ZLp Tolerance, resulting FilterHigh frequency;

    - Design of the digital filter is made in such a way that when the FilterHigh is lower than FilterLow, signal direction is downwards, and when the FilterHigh is higher than FilterLow, signal direction is upwards.

    ii. Two conditions are set for the defining the speed of the vehicle as constant in order to improve the accuracy of the detection: the speed must stay in a closed measurement range interval defined by a tolerance parameter of +/- 1 kph for a measuring time of 4-10 s;

    iii. The preferred axis of the acceleration sensor is the Z-axis o the Combo sensor 101;

    iv. The length of detection qualification phase defined in the fourth sub-step is called RotEvalCnt and expressed in rotations, preferably within the interval 50-500 rotations of the wheel. Thus the second and third set of steps will last together exactly the RotEvalCnt;

v. There are two detection conditions set in the fifth sub-step. The first detecting condition set is that the time interval measured for a rotation MsPerRot to be included in the interval of the threshold ExpMsRotThr; The expected time for one complete wheel rotation ExpMsRot together with its tolerance parameter define the first threshold as a closed interval:

$$\text{ExpMsRotThr} = [\text{ExpMsRot} * (1 - \text{MatchTolerance}) \div \text{ExpMsRot} * (1+$$

$$\text{MatchTolerance})]$$

$$[\text{Formula } 4]$$

In case there is unbalance, the signal from unbalanced wheel has a sinus shape. The actual time interval for a rotation MsPerRot is measured -expressed in ms, that corresponds to two consecutive changes in direction of the acceleration signal to downwards.

- In order that the method to be reliable, it is not sufficient that the first detecting condition be fulfilled only once during the length of the detection qualification phase RotEvalCnt, it must be fulfilled more than once, thus the second detection condition refers to how many times the first detection condition must be met.

- In order to apply the second detecting condition, a second counter- MatchRotCnt is set to measure how many times during the length of the detection qualification phase RotEvalCnt the first detection condition is fulfilled. Each time when the first detection condition is satisfied, the counter MatchRotCnt will increment one unit.

- Finally, in order to apply the second detecting condition, the condition detection threshold MatchRotThr is set referring to how many times must the first detecting condition be fulfilled during the length of the detection qualification phase RotEvalCnt in order to detect unbalance.

This condition detection threshold typically ranges between 10 and 25 times and depends on the length of detection qualification phase RotEvalCnt, so that the longer said phase is the larger the corresponding threshold.

vi. The above values of the parameters, conditions and tolerance parameters are stored in a memory of the ACU 2.

Second set of steps of the method for the first preferred embodiment refers to reading information from the acceleration sensor, and calculating actual values corresponding to the relevant parameters selected in the first set of steps.

i. Acceleration signal from the sensor 101 is read and the vehicle speed in kph is acquired from vehicle's CAN bus 4.

ii. Actual values of the wheel frequency WheelFreq and Time Interval for a Rotation MsPerRot are calculated using Formulas 2 and 3, respectively.

Third set of steps of the method for the first preferred embodiment refers applying detection conditions as set in the first set of steps and deciding upon unbalance.

i. In the first sub-step of the third set of steps:

- The acceleration signal is filtered with the digital filter with the aim of filtering the frequencies that are close to the wheel rotational frequency;
- The actual time interval for a rotation MsPerRot is measured -expressed in ms, that corresponds to two consecutive changes in direction of the acceleration signal to downwards and said time interval is compared with the first threshold ExpMsRotThr, calculated according to Formula 4.
- If the measured time interval for a rotation [MsPerRot is included in the first threshold ExpMsRotThr, the counter MatchRotCnt is incremented with one unit corresponding to one-wheel rotation, in this way the first detection condition is fulfilled;
- If the counter MatchRotCnt is incremented with units exceeding the second threshold established MatchRotThr, the second detection condition is fulfilled and wheel is detected as unbalanced.

ii. Once the wheel is detected as unbalanced, in the third sub-step, the condition of unbalanced wheel is stored in the memory of the ACU 2 and it is sent via CAN bus 4 to the instrument panel 5 to display a warning message to the driver.

After expiry of one qualification phase, that is once RotEvalCnt number of rotations elapsed, irrespective of whether unbalance was or not detected, MatchRotCnt and RotEvalCnt are reset to 0 (zero) and a new detection qualification phase is started.

Said digital filter configured may be a 1st or 2nd order digital filter, such as but not limited to Bessel, Butterworth filter.

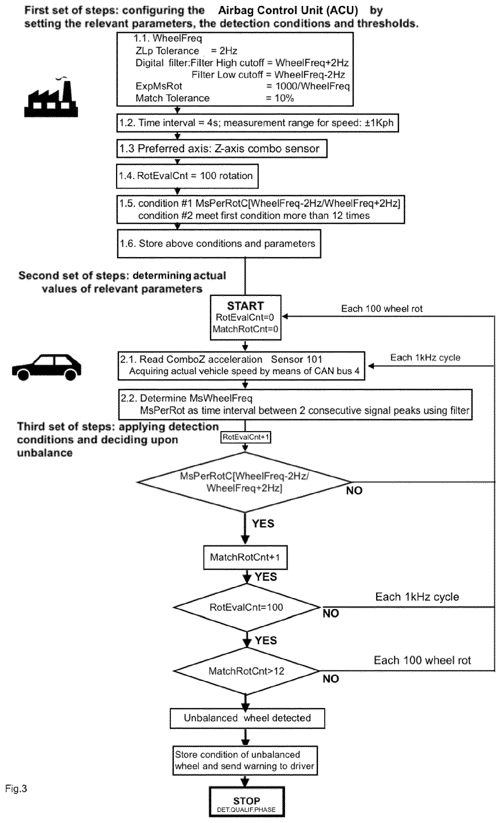

A first preferred embodiment of the method according to the invention is depicted in Fig. 3. It is initiated at the calling rate of 1kHz and the particular configuration of the ACU 2 in the first set of steps of the example of realization corresponding to first preferred embodiment is made as follows:

- ZLp Tolerance is defined at 2 Hz and digital filter is configured with Filter High = WheelFreq + 2 Hz and FilterLow= WheelFreq-2Hz, Tolerance for ExpMsRot is 10%;
- The speed must stay in a closed measurement range interval defined by a tolerance parameter of +/- 1 kph for a measuring time of 4s.;
- Preferred sensor is a Combo sensor 101 measuring signal on Z axis;
- Length of the detection qualification phase RotEvalCnt is 100 rotations;
- First condition is that the actual time interval for a rotation MsPerRot to be lesser than ExpMsRot + 10% and second condition is that first condition must occur at least for 12 rotations.

In the above- captioned preferred embodiment, during operation of the vehicle, at the end of the previous cycle of 100 rotations coinciding with the beginning of a new cycle of 100 rotations, the counter RotEvalCnt and counter MatchRotCnt are set at 0.

Each 1kHz cycle corresponding to the calling rate and for each detection qualification phase of 100 rotations, the particulars of the second and third set of steps of the method according to the example of realization are as follows:

- Reading the acceleration signal from the Z axis of the combo sensor 101 and simultaneously acquiring the vehicle speed in kph from vehicle's CAN bus 4;
- Calculating WheelFreq and ExpMsRot using Formulas 2 and respectively 3;
- Filtering the acceleration signal with the digital filter using the 2 cut-off frequencies: FilterLow and FilterHigh;
- Measuring the time between two consecutive changes in direction downwards of the acceleration signal resulting MsPerRot;
- Incrementing the counter MatchRotCnt with one unit if MsPerRot is included in the threshold ExpMsRotThr calculated according to Formula 4;
- If, during the 100 rotations, MatchRotCont is incremented with more than 12 units, the second detection condition is fulfilled and the wheel is detected as unbalanced;

In case the first detection condition is not met, the second detection condition will not be applied, the wheel is not detected as unbalanced, but the counters RotEvalCnt and MatchRotCnt are anyway reset to 0 at the beginning of a new detection qualification phase.

According to another preferred embodiment of the method, the ACU 2 is configured to perform frequency based processing of the acceleration signal, whose aim is to find the energy of the acceleration signal for the frequency matching the wheel rotation frequency and to compare the squared amplitude corresponding to variation of such energy with a threshold.

The particular configuration of the ACU 2 in the first set of steps of the second preferred embodiment is made as follows:

i. Two relevant parameters are defined in the first sub-step. First parameter is the expected wheel frequency Wheel-Freq, calculated using Formula 2, which is stored in the memory of the ACU 2. Second parameter is the expected squared amplitude ExpWheelAmplit, which is used as a threshold. A Goertzel digital filter is also configured in the first substep in order to process the acceleration signal and calculate the squared amplitude frequency corresponding to the expected wheel frequency WheelFreq.

ii. Two conditions are set for defining the speed of the vehicle as constant: the speed must stay in a closed measurement range interval defined by a tolerance parameter of +/- 1 kph for a measuring time of 4-10 s.

iii. The preferred axis of the acceleration sensor 101 defined in the second sub-step is the Y-axis;

iv. The length of detection qualification phase defined in the fourth sub-step is comprised in the interval from 1 to 3 minutes; v.Two detection conditions are set in the fifth sub-step. The first detecting condition set is that the actual squared amplitude (MsWheelAmplitud) to exceed the expected squared amplitude (ExpWheelAmplit) as a threshold; the second detection condition is that the first condition to be met for a number of times that is greater than a detection condition threshold Thr2, that typically ranges between 3 and 5 times.

vi. The above values of the parameters, conditions and tolerance parameters are stored in a memory of the ACU 2.

Second set of steps of the method for the first preferred embodiment refers to reading information from the sensor, and calculating actual values corresponding to the relevant parameters selected in the first set of steps.

i. Acceleration signal from the sensor 101 is read as well as the vehicle speed in kph from vehicle's CAN bus 4.

ii. The actual values of the wheel rotation frequency MsWheelFreq are calculated based on the actual vehicle speed MsVehicleSpeed acquired by vehicle's CAN bus 4 and the values of the actual squared amplitude MsWheelAmplit are determined using Goertzel filter based on the actual values of the wheel rotation frequency MsWheelFreq measured when the vehicle is operated.

Third set of steps of the method for the second preferred embodiment refers applying detection conditions defined in the first set of steps and deciding upon unbalance.

i. In the first sub-step of the third set of steps vehicle's actual speed is monitored and it is checked if it stays within the range defined in the second sub-step of the first set of steps. In the affirmative, MsWheelAmplit is determined using Goertzel filter based on the actual values of the wheel rotation frequency MsWheelFreq, said MsWheelAmplit being compared with the corresponding expected value ExpWheelAmplit. In case MsWheelAmplit is greater than ExpWheelAmplit, the first detection condition is met and a counter CntAmplit is incremented with one unit. In case the value of CntAmplit exceeds the second threshold- that typically ranges between 3 and 5 times, the second condition is met and the wheel is detected as unbalanced.

ii. Once the wheel is detected as unbalanced, in the third sub-step, the condition of unbalanced wheel is stored in the memory of the ACU 2 and it is sent via vehicle's CAN bus 4 to the instrument panel 5 to display a warning message to the driver.

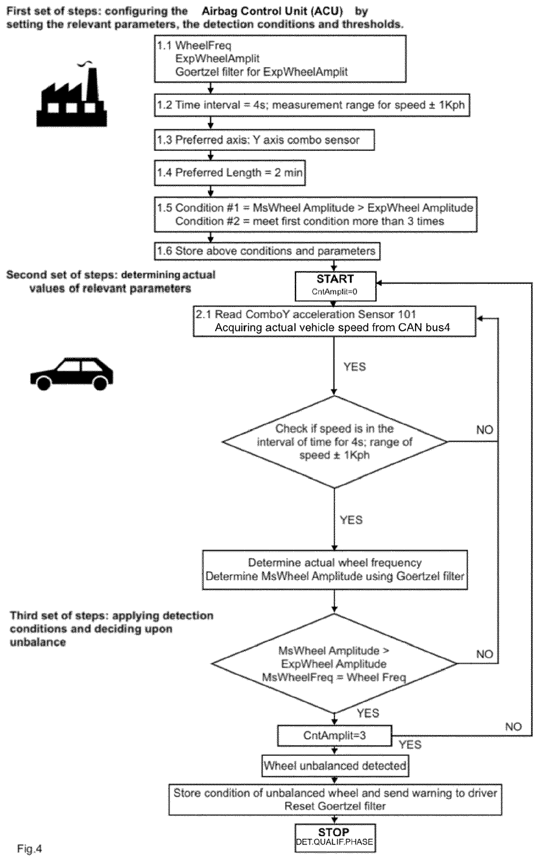

The example of realization corresponding to the second preferred embodiment of the method according to the invention is depicted in Fig. 4. It is initiated for a calling rate of 1kHz and the particular configuration of the ACU 2 in the first set of steps of the example of realization corresponding to second preferred embodiment is made as follows:

i. The speed must stay in a closed measurement range interval defined by a tolerance parameter of +/- 1 kph for a measuring time of 4s.;

ii. Preferred sensor is Combo sensor 101 measuring signal from Y axis;

iii. Length of the detection qualification phase is 2 minutes.

iv. First detection condition is that the actual MsWheelAmplit must be strictly higher than ExpWheelAmplit and the second detection condition is that the number of times for which the first condition must be met during the qualification phase of 2 minutes is at least 3 times.

During operation of the vehicle 2, at the end of the previous cycle of 2 minutes coinciding with the beginning of a new cycle of 2 minutes, Goertzel filter is reset and the counter CntAmplit is set at 0 (zero).

Each 1kHz cycle corresponding to the calling rate and for each detection qualification phase of 2 minutes, the particulars of the second and third set of steps of the method according to the example of realization are as follows:

- Read the acceleration signal from the Y axis of the Combo sensor 101 and simultaneously acquiring the vehicle speed in kph by means of the vehicle's CAN bus 4;
- Monitor if the speed stays in the defined range of stored value +/- 1kph for at least 4 seconds;
- In the affirmative determine the actual values of the wheel rotation frequency MsWheelFreq and actual squared amplitude MsWheelAmplit using Goertzel filter;
- If the calculated actual squared amplitude MsWheelAmplit is higher than ExpWheelAmplit, the first condition is met, and CntAmplit is incremented one unit;
- If the CntAmplit is incremented at least three times during the 2 minutes' qualification phase, the wheel is detected as unbalanced.

An Electronic control unit ECU 2 with at least an acceleration sensor 101 is especially incorporated in the vehicle 1, being connected via vehicle's CAN bus 4 and instrument panel 5, and is configured to perform the method according to any of the embodiments according to the invention.

Electronic control unit ECU 2 comprises various modules: a calibration module, a communication module by vehicle's CAN bus 4, at least one memory, a signal processing module, at least two digital filters, a diagnostic and decision signal processing module.

The calibration module is configured to define the relevant parameters for the assessment of the unbalance together with corresponding tolerance parameters, to define at least one corresponding parameter threshold and to configure the at least two digital filters for processing the acceleration signal.

The calibration module is also configured for selecting the axis of the acceleration sensor 101 in order to measure the acceleration signal, and also configured for defining of time interval and measurement range interval in which the speed of the vehicle 1 can vary in order to allow measurement of the relevant parameters defined.

The calibration module is further configured to set a length of the detection qualification phase, and also configured to set at least two detection conditions to be fulfilled during the detection qualification phase for the relevant parameters and to set at least one detection condition threshold.

The Electronic control unit ECU 2 comprises a communication module with CAN bus 4 for communication between ECU and other systems of the vehicle.

The Electronic control unit ECU 2 comprises the least one memory to store the expected values of the relevant parameters, the parameter thresholds and the conditions and the condition of unbalanced wheel.

The Electronic control unit ECU 2 further comprises a signal processing module configured to read the acceleration signal from the axis acceleration sensor 101 and, simultaneously, acquiring the actual speed from vehicle's CAN bus 4, to determine wheel rotation frequency, and to compute actual values corresponding to said relevant parameters.

The Electronic control unit ECU 2 comprises also at least two digital filters, out of which one adapted to be used for time-based processing of the acceleration signal and one adapted to be used for frequency-based processing of the acceleration signal. The filters are configured by the calibration module to apply the at least two detection conditions.

A diagnostic and decision signal processing module of the Electronic control unit ECU 2 is configured to compare actual values of the relevant parameters with the values of an interval created by said relevant parameters +/- the corresponding tolerance parameters and applying the at least two detection conditions.

The diagnostic and decision signal processing module is configured to determine a wheel as unbalanced if the at least two detection conditions are fulfilled during the length of the detection qualification phase; in case said detection conditions are met is configured to store the condition of unbalanced wheel in the at least one memory module and to send it to the instrument panel.

The Electronic control unit ECU 2 is preferably an Airbag Control Unit 2 and the at least two digital filters are preferably a 1st or 2nd order filter such as but not limited to Bessel Butterworth for time-based processing of the acceleration signal and a Goerztel filter for the frequency based processing of the accelerations signal.

Finally, a non-volatile computer-readable storage medium is provided comprising code to cause a processor to perform a method according to the invention.

Since acceleration sensor, accelerometer and location of the ECU 2 within the vehicle 1 are already set by the manufacturer and cannot be changed, all the above configurations of the ECU 2 have as result a very versatile ECU allowing multiple combinations between the embodiments and the features depicted above, the purpose of such combinations being to select the method of detecting unbalance that allows zero false detection for each type of vehicle.

**It** should be noted that the foregoing embodiments and examples of realization, as well as the figures are provided merely for the purpose of a better understanding of the invention and are in no way limiting present invention. Changes may be made within the scope of the claims without departing from the coverage of present invention in its aspects; rather present invention extends to all functionally equivalent embodiments and methods within said scope of the appended claims.

**Claims**

1. Method for detecting unbalance of a wheel (FL, FR, RL, RR) of a vehicle (1) carried out in an Electronic Control Unit (ECU) (2), using an ECU acceleration sensor (101) at a predetermined calling rate, digital processing of an acceleration signal acquired from vehicle's Controller Area Network (CAN) bus (4) for communications with ECU, **characterized in that** it comprises the following steps:

   First set of steps: configuring the Electronic Control Unit (ECU) (2) by setting the relevant parameters for detecting unbalance of a wheel, the detection conditions and their corresponding parameter thresholds consisting in:

      1.1. Defining at least two relevant parameters for the assessment of the unbalance together with at least one corresponding parameter threshold and configuring at least one digital filter for processing the acceleration signal;

1.2. Defining a time interval and a measurement range interval in which the speed of the vehicle (1) can vary in order to allow measurement of said relevant parameters;

1.3. Selecting at least one axis of the acceleration sensor (101) to measure the acceleration signal;

1.4. Setting a length of a detection qualification phase;

1.5. Setting at least two detection conditions to be fulfilled during the detection qualification phase by the relevant parameters and setting at least one detection condition threshold;

1.6. Storing the said values of relevant parameters, the detection conditions and their corresponding parameter thresholds in a memory.

Second set of steps: determining actual values of relevant parameters consisting in:

2.1. Reading the acceleration signal from said at least one axis acceleration sensor (101) and, simultaneously, acquiring the value of actual vehicle speed from vehicle's Controller Area Network (CAN) bus 4;

2.2. Determining actual values corresponding to said relevant parameters.

Third set of steps: applying detection conditions and deciding upon unbalance consisting in:

3.1. Applying said at least two detection conditions set by using the digital filter and detecting wheel as unbalanced if the at least two detection conditions are fulfilled during the length of the detection qualification phase;

3.2. Storing the condition of unbalanced wheel in said memory and sending same to the instrument panel to display a warning message to the driver.

**2.** Method according to claim 1, **characterized in that** it is preferably carried out in an Airbag Control Unit (ACU) (2), using an acceleration sensor (101) at a calling rate between 500 Hz and 1000 Hz and having a measurement range of 0-6 g and a resolution of the acceleration measurement is over 1000 digits/g.

**3.** Method according to claim 1 or 2, **characterized in that** parameter thresholds may be expressed as a closed interval of its relevant parameter using corresponding tolerance parameters;

**4.** Method according to any of the preceding claims, **characterized in that**, in order to carry out a time-based processing of the acceleration signal, the particulars of the method are set:

For the first set of steps of the method:

1.1. The two relevant parameters and the respective tolerance parameters are:

- the wheel frequency rotation (WheelFreq), with its tolerance for the wheel frequency rotation (ZLp-Tolerance), said tolerance preferably being within the closed interval 0-5 Hz, based on which a digital filter is configured using two cut-off frequencies:

- a lower cut-off frequency (WheelFreq) - (ZLp Tolerance), resulting (FilterLow) frequency;
- and a higher cut-off frequency (WheelFreq) + (ZLp Tolerance), resulting (FilterHigh) frequency,

in such a way that when the (FilterHigh) is lower than (FilterLow), signal direction is downwards, and when the (FilterHigh) is higher than (FilterLow), signal direction is upwards;

- and the time needed for a complete wheel rotation (ExpMsRot) at the respective frequency with its tolerance (MatchTolerance), preferably defined as a percentage of 5-15%,

1.2. The preferred time interval for the speed is 4-10s and the preferred speed tolerance parameter of is 1 kph.

1.3. The preferred axis is the Z-axis;

1.4. The preferred length of a detection qualification phase (RotEvalCnt) is between 50-500 rotations of the wheel;

1.5. The first detecting condition set is that the actual time needed for a complete wheel rotation (MsPerRot) must be included in a threshold (ExpMsRotThr) calculated according to formula: ExpMsRotThr = [ExpMsRot *(1 -MatchTolerance) ÷ ExpMsRot *(1+ MatchTolerance)] (Formula 4), and the second detection condition is that the first condition to be met for a number of times that is greater than a second threshold (MatchRotThr), that preferably ranges between 10 and 25 times .

For the second set of steps of the method:

2.2. The actual values of the two relevant parameters calculated by time-based processing of the acceleration signal are: the actual_wheel frequency rotation (MsWheelFreq) and time needed for a complete wheel rotation (MsPerRot).

5. Method accord to claim 4, **characterized in that** said digital filter can be a 1st or 2nd order digital filter, such as but not limited to Bessel, Butterworth filter.

6. Method according to claim 4 or 5, **characterized in that**:

the preferred time interval is 4 s, the preferred acceleration sensor is a Z-axis Combo sensor, the preferred length of a detection qualification phase is for 100 rotations, tolerance for the wheel frequency rotation (ZLpTolerance) is 2 Hz, tolerance for the time needed for complete wheel rotation (MatchTolerance) is 10% and the second threshold (MatchRotCnt) is 12 times.

7. Method according to any of the claims 1 to 3, **characterized in that** in order to carry out a frequency-based processing of the acceleration signal, the particulars of the method are set:

For the first set of steps of the method:

1.1. The two relevant parameters and the respective tolerance parameters are:

- the expected wheel frequency rotation (WheelFreq)
- the expected squared amplitude (ExpWheelAmplit) of the acceleration signal calculated by a Goertzel filter based on a single frequency corresponding to expected wheel rotation frequency (WheelFreq).

1.2. The preferred time interval is 4-10s and the measurement range closed interval defined by a preferred speed tolerance parameter of +/- 1 kph.
1.3. The preferred axis is the Y-axis;
1.4. The preferred length of the detection qualification phase is for 1-3 minutes;
1.5. The first detecting condition set is that the actual squared amplitude (MsWheelAmplitud) must exceed the expected squared amplitude (ExpWheelAmplit) as a threshold

- and the second detection condition is that the first condition is met for a number of times that is greater than a second threshold (Thr2), that preferably ranges between 3 and 5 times.

For the second set of steps of the method:
2.3. Determine the actual wheel rotation frequency (MsWheel Freq) and determine the actual squared amplitude (Ms WheelAmplit) by means of a Goertzel filter for the actual wheel rotation frequency (MsWheel Freq).

8. Method according to claim 7 **characterized in that** the preferred time interval is 4 s, preferred length of the detection qualification phase is 2 min and the second threshold Thr2 is 3 times.

9. Electronic control unit (ECU) (2) incorporated in a vehicle being configured to perform a method according one of claims 1 to 8 comprising:

i) a calibration module configured to carry out the followings:

- to define at least two relevant parameters for the assessment of the unbalance together with at least one corresponding parameter threshold;
- to configure the at least two digital filters for processing the acceleration signal;
- to select at least one axis for which the acceleration sensor (101) measures an acceleration signal;
- to define a time interval and a measurement range interval in which the speed of the vehicle can vary in order to allow measurement of the relevant parameters.
- to set a length of the detection qualification phase;
- to set at least two detection conditions to be fulfilled during the detection qualification phase by the relevant parameters and to set at least one detection condition threshold.

ii) A communication module adapted for vehicle's CAN bus (4);

iii) At least one memory to store the expected values, the parameter thresholds and the conditions and the condition of unbalanced wheel;

iv) A signal processing module configured to carry out the followings:

- to read the acceleration signal from the at least one axis acceleration sensor (101) and, simultaneously, to acquire the actual values of the vehicle speed from vehicle's Controller Area Network (CAN) bus (4);
- to determine wheel rotation frequency;
- to compute actual values of said relevant parameters.

v) At least two digital filters, out of which one adapted to be used for time-based processing of the acceleration signal and one adapted to be used for processing of the acceleration signal, said filters being configured by the calibration module to apply the at least two detection conditions;

vi) A diagnostic and decision signal processing module configured to carry out the followings:

- to apply the at least two detection conditions;
- to determine a wheel as unbalanced if the at least two detection conditions are fulfilled during the length of the detection qualification phase;
- in case detection conditions are met, to store the values corresponding to the condition of unbalanced wheel in the at least one memory module and to send it to the instrument panel.

**10.** Electronic control unit (ECU) (2) according to claim 9, **characterized in that** ECU is an Airbag Control Unit (ACU) (2) and the digital filter for time-based processing of the acceleration signal is a 1st or 2nd order digital filter, such as but not limited to Bessel, Butterworth filter and the digital filter for frequency-based processing of the acceleration signal is a Goertzel filter.

**11.** Non-volatile computer-readable storage medium comprising code to cause a processor to perform a method according to any of the claims 1 to 8.

**FL** **5** **FR**

**3**

**2**

**101**

**4**

**1**

**RL** **RR**

**1** VEHICLE
**2** ECU
**3** ENGINE
**4** CAN BUS
**5** INSTRUMENT PANEL
**101** ACCELERATION SENSOR

Fig.1

Table 1

Table 2

Table 3

**First set of steps: configuring the Electronic Control Unit (ECU) by setting the relevant parameters, the detection conditions and thresholds.**

1.Defining at least two relevant parameters thresholds and configuring at least one digital filter

2.Defining a time interval and a measurement range interval in which the speed of the vehicle can vary

3.Selecting at least one axis for which the acceleration sensor (101) measure an acceleration signal

4.Setting a length of the detection qualification phase

5.Setting at least two detection conditions to be fulfilled during the detection qualification phase for the relevant parameters

6. Storing the above values in a memory

**Second set of steps: determining actual values of relevant parameters**

START
DET.QUALIF.PHASE

1.Reading the acceleration signal from the at least one axis acceleration sensor 101 and, simultaneously, acquiring actual vehicle speed by means of CAN bus 4

2. Determining actual values of said relevant parameters

**Third set of steps: applying detection conditions and deciding upon unbalance**

1.Applying the at least two detection conditions set and detecting wheel as unbalanced if the at least two detection conditions are fulfilled during the length of the detection qualification phase

NO

YES

2.Storing the condition of unbalanced wheel and sending same to the instrument panel to display a warning message to the driver

STOP
DET.QUALIF.PHASE

**Fig.2**

EP 3 637 077 A1

**First set of steps: configuring the Airbag Control Unit (ACU) by setting the relevant parameters, the detection conditions and thresholds.**

1.1. WheelFreq
ZLp Tolerance = 2Hz
Digital filter:Filter High cutoff = WheelFreq+2Hz
Filter Low cutoff = WheelFreq-2Hz
ExpMsRot = 1000/WheelFreq
Match Tolerance = 10%

1.2. Time interval = 4s; measurement range for speed: ±1Kph

1.3 Preferred axis: Z-axis combo sensor

1.4. RotEvalCnt = 100 rotation

1.5. condition #1 MsPerRotC[WheelFreq-2Hz/WheelFreq+2Hz]
condition #2 meet first condition more than 12 times

1.6. Store above conditions and parameters

**Second set of steps: determining actual values of relevant parameters**

START
RotEvalCnt=0
MatchRotCnt=0

Each 100 wheel rot

2.1. Read ComboZ acceleration Sensor 101
Acquiring actual vehicle speed by means of CAN bus 4

Each 1kHz cycle

2.2. Determine MsWheelFreq
MsPerRot as time interval between 2 consecutive signal peaks using filter

**Third set of steps: applying detection conditions and deciding upon unbalance**

RotEvalCnt+1

MsPerRotC[WheelFreq-2Hz/ WheelFreq+2Hz]      NO

YES

MatchRotCnt+1

YES

RotEvalCnt=100      NO          Each 1kHz cycle

YES

MatchRotCnt>12      NO          Each 100 wheel rot

Unbalanced wheel detected

Store condition of unbalanced wheel and send warning to driver

Fig.3

STOP
DET.QUALIF.PHASE

18

**First set of steps: configuring the Airbag Control Unit (ACU) by setting the relevant parameters, the detection conditions and thresholds.**

1.1 WheelFreq
ExpWheelAmplit
Goertzel filter for ExpWheelAmplit

1.2 Time interval = 4s; measurement range for speed ± 1Kph

1.3 Preferred axis: Y axis combo sensor

1.4 Preferred Length = 2 min

1.5 Condition #1 = MsWheel Amplitude > ExpWheel Amplitude
Condition #2 = meet first condition more than 3 times

1.6 Store above conditions and parameters

**Second set of steps: determining actual values of relevant parameters**

START
CntAmplit=0

2.1 Read ComboY acceleration Sensor 101
Acquiring actual vehicle speed from CAN bus4

YES

Check if speed is in the interval of time for 4s; range of speed ± 1Kph  — NO

YES

Determine actual wheel frequency
Determine MsWheel Amplitude using Goertzel filter

**Third set of steps: applying detection conditions and deciding upon unbalance**

MsWheel Amplitude >
ExpWheel Amplitude
MsWheelFreq = Wheel Freq  — NO

YES

CntAmplit=3  — YES

NO

Wheel unbalanced detected

Store condition of unbalanced wheel and send warning to driver
Reset Goertzel filter

STOP
DET.QUALIF.PHASE

Fig.4

Europäisches
Patentamt

European
Patent Office

Office européen
des brevets

# EUROPEAN SEARCH REPORT

Application Number

EP 18 46 5593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 076 232 A1 (MERITOR HEAVY VEHICLE SYS LTD [US]) 14 February 2001 (2001-02-14)<br>* paragraphs [0001], [0004], [0006], [0009] - [0015]; figures * | 1-3,9-11<br>4-8 | INV.<br>G01M1/22<br>G01M1/28 |
| X | WO 2009/070065 A1 (VOLVO LASTVAGNAR AB [SE]; CARRESJOE ERIK [SE]; HASSELBERG PER [SE]) 4 June 2009 (2009-06-04)<br>* page 1, line 8 - line 15 *<br>* page 38, line 19 - page 40, line 10 *<br>* figure 11 * | 1,9 | |
| A,D | EP 3 002 576 A1 (CONTINENTAL AUTOMOTIVE GMBH [DE]) 6 April 2016 (2016-04-06)<br>* claims 1-15 * | 1-11 | |

**TECHNICAL FIELDS SEARCHED (IPC)**

G01M

The present search report has been drawn up for all claims

| Place of search | Date of completion of the search | Examiner |
|---|---|---|
| The Hague | 21 June 2019 | Keita, Mamadou |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 637 077 A1**

## ANNEX TO THE EUROPEAN SEARCH REPORT
## ON EUROPEAN PATENT APPLICATION NO.

EP 18 46 5593

21-06-2019

| Patent document cited in search report | | Publication date | Patent family member(s) | | Publication date |
|---|---|---|---|---|---|
| EP 1076232 | A1 | 14-02-2001 | EP<br>US | 1076232 A1<br>6353384 B1 | 14-02-2001<br>05-03-2002 |
| WO 2009070065 | A1 | 04-06-2009 | NONE | | |
| EP 3002576 | A1 | 06-04-2016 | NONE | | |

EPO FORM P0459

# EP 3 637 077 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 14464009 A
- EP 06042016 A

- KR 20130064344